# EUROPÄISCHE PATENTSCHRIFT

(11) **EP 1 473 313 B1**
(45) Veröffentlichungstag und Bekanntmachung des Hinweises auf die Patenterteilung: **14.06.2006**
(21) Anmeldenummer: 04009184.5
(22) Anmeldetag: 17.04.2004
(51) Int. Cl.: C08G 18/42, C08J 9/12, C08G 18/40

(54) **Flexible Formteile aus mit Stickstoff, Luft oder Kohlendioxid geschäumtem Polyurethan und ihre Verwendung**
Flexible mouldings prepared from nitrogen, air or carbon dioxide blown polyurethane and their use
Pieces moulees flexibles preparees à partir de polyurethane souffle à l'azote, l'air ou au dioxyde de carbone et leur utilisation

(30) Priorität: 30.04.2003 DE 10319393
(43) Veröffentlichungstag der Anmeldung: 03.11.2004
(73) Patentinhaber: Bayer MaterialScience AG, 51368 Leverkusen (DE)
(72) Erfinder: Grimm, Wolfgang, 51381 Leverkusen (DE); Michels, Erhard, Dr., 51061 Köln (DE); Schütze, Marc, Dr., 40597 Düsseldorf (DE)

(56) Entgegenhaltungen:
- EP-A- 0 178 562
- EP-A- 1 225 199
- WO-A-00/02940
- WO-A-20/04037882
- US-A- 5 453 480
- PARKS K L ET AL: "GENERATION OF MICROCELLULAR POLYURETHANE FOAMS VIA POLYMERIZATION IN CARBON DIOXIDE. II: FOAM FORMATION AND CHARACTERIZATION" 1. Oktober 1996 (1996-10-01), POLYMER ENGINEERING & SCIENCE, WILEY & SONS, BOGNOR REGIS, GB, PAGE(S) 2417-2431 , XP000637076 ISSN: 0032-3888 * Seite 2429 - Seite 2430 *

## Beschreibung

Die Erfindung betrifft flexible Formteile aus geschäumtem Polyurethan mit Dichten von <500 kg/m³ und mit hoher Formteilstabilität (maximale Formteilschwindung 1,5 %; gemäß DIN ISO 02769) auf Basis spezieller Komponenten und ihre Verwendung, insbesondere im Schuhbereich.

In EP-A 1 225 199 wird ein Verfahren zur Herstellung von flexiblen mikrozellularen Elastomeren mit niedriger Dichte beschrieben. Als Treibmittel wird CO₂ eingesetzt, das in der Isocyanatkomponente oder der Polyolkomponente oder beiden gelöst wird. Diese mit CO₂ getriebenen Elastomere weisen eine gleichmäßige Zellstruktur und einen niedrigen Gehalt an Hamstoffhartsegmenten auf. Der Nachteil besteht darin, dass die mechanischen Eigenschaften, wie z.B. Zugfestigkeit, Weiterreißwiderstand und Rückstellvermögen dieser auf Polyether basierenden Elastomere nicht gut sind.

Aufgabe der vorliegenden Erfindung war es, Formteile zur Verfügung zu stellen, die diese Nachteile nicht aufweisen, sondern stattdessen eine hohe Zugfestigkeit und ein hohes Rückstellvermögen bei Formteildichten von < 500 kg/m³ und bei dynamischer Belastung haben und einen niedrigen Hamstoffanteil aufweisen.

Diese Aufgabe konnte durch die erfindungsgemäßen Formteile gelöst werden.

Gegenstand der Erfindung sind flexible Formteile aus geschäumtem Polyurethan mit Formteildichten von <500 kg/m³, bevorzugt von <350 kg/m³ und mit einer maximalen Formteilschwindung von 1,5 % (gemäß DIN ISO 02769) erhältlich aus
a) einem oder mehreren organischen Isocyanaten mit 2 bis 4 NCO-Gruppen pro Molekül und einem NCO-Gehalt von 6-49 Gew.-%;
b) einer oder mehreren Polyolkomponenten aus der Gruppe bestehend aus
   b1) Polyetheresterpolyolen mit einem zahlenmittleren Molekulargewicht von 800 g/mol bis 6000 g/mol, bevorzugt von 1200 g/mol bis 4000 g/mol, einer zahlenmittleren Funktionalität von 1,7 bis 4, bevorzugt von 1,8 bis 2,7 und einem Gewichtsverhältnis von Ethergruppen zu Estergruppen des Polyetheresterpolyols von 0,05:0,95 bis 0,48:0,52, bevorzugt von 0,08:0,92 bis 0,3:0,7,
      wobei die Polyetheresterpolyole erhältlich sind durch Polykondensation von
      b1.1) einer oder mehreren Dicarbonsäuren mit bis zu 12 Kohlenstoffatomen und/oder deren Derivaten,
      b1.2) einer oder mehreren Polyetherpolyolkomponenten aus der Gruppe bestehend aus Polyetherpolyolen mit einem zahlenmittleren Molekulargewicht von 1000 g/mol bis 8000 g/mol, bevorzugt von 1500 g/mol bis 6000 g/mol, einer mittleren Funktionalität von 1,7 bis 4, bevorzugt von 1,8 bis 2,7 sowie einem Ethylenoxidgehalt von 10 bis 40 Gew.-%, bevorzugt von 15 bis 35 Gew-%, besonders bevorzugt 18 bis 32 Gew-%, und Ether-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge des Polymerpolyols enthalten,
      b1.3) einem oder mehreren Polyolen mit einem zahlenmittleren Molekulargewicht von 62 bis 750 g/mol, bevorzugt von 62 g/mol bis 400 g/mol, besonders bevorzugt von 62 g/mol bis 200 g/mol, einer zahlenmittleren Funktionalität von 2 bis 8 und mit mindestens 2 endständigen OH-Gruppen pro Molekül,
      b1.4) gegebenenfalls Ester- basierte Polymerpolyole, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.-% Füllstoffe, bezogen auf die Gesamtmenge des Polymerpolyols b1.4) enthalten,
         und
   b2) einer Mischung aus
      b2.1) einer o der mehreren Polyesterpolyolkomponenten aus der Gruppe bestehend aus Polyesterpolyolen mit einem zahlenmittleren Molekulargewicht von 1000 bis 4000 g/mol und einer Funktionalität von 1,7 bis 4 und Ester-basierten Polymerpolyolen mit OH-Zahlen von 10 bis 149 und mittleren Funktionalitäten von 1,7 bis 4, bevorzugt von 1,8 bis 3,5, die 1 bis 50 Gew.-%, vorzugsweise 1 bis 45 Gew.-% Füllstoffe, bezogen auf die Gesamtmenge des Polymerpolyols enthalten,
      b2.2) 5 bis 48 Gew.-%, bevorzugt 8 bis 30 Gew.-%, bezogen auf b2.1) einer oder mehrerer Polyetherpolyolkomponenten aus der Gruppe bestehend aus Ethylenoxidgruppen enthaltenden Polyetherpolyolen mit jeweils einem zahlenmittleren Molekulargewicht von 900 bis 18000 g/mol, bevorzugt 2000 bis 8000 g/mol, einer Funktionalität von 1,7 bis 4, bevorzugt 1,8 bis 2,7 und einem Ethylenoxidgehalt von 10 bis 40 Gew.-%, bevorzugt 15 bis 35 Gew.-%, besonders bevorzugt 18 bis 32 Gew.-% und Ether-basierten Polymerpolyolen, die OH-Zahlen von 10 bis 149 und mittlere Funktionalitäten von 1,7 bis 4, bevorzugt von 1,8 bis 3,5 aufweisen und die 1 bis 50 Gew.-%, vorzugsweise 1 bis 45 Gew.-% Füllstoffe, bezogen auf die Gesamtmenge des Polymerpolyols enthalten,
c) 5 bis 25 Gew.-%, bezogen auf die Summe der Komponente b) und c) an Vernetzungsmitteln/Kettenverlängerern
d) Treibmittelkomponenten bestehend aus
   d1) Stickstoff, Luft und/oder Kohlendioxid und
   d2) wenigstens einer Komponente aus der Gruppe bestehend aus chemischen Treibmitteln und physikalischen Treibmitteln mit Siedepunkten im Bereich von -30°C bis 75°C,
e) gegebenenfalls Emulgatoren,
f) gegebenenfalls Zusatz- und Hilfsmitteln,
g) gegebenenfalls Katalysatoren,
wobei die Kennzahl 95 bis 115 beträgt.

Die eingesetzte Komponente d1) wird bevorzugt zur Polyolkomponente b) und/oder zum Isocyanat a) zugesetzt. Die Komponente d2) wird bevorzugt der Polyolkomponente b) zugesetzt.

Kennzahl bedeutet das Molverhältnis der NCO-Gruppen aus dem eingesetzten Isocyanat zu den NCO-reaktiven Endgruppen aus den Komponenten b), c) und d) multipliziert mit 100. Eine Kennzahl von 100 entspricht einer stöchiometrischen Menge Isocyanatgruppen zu NCO-reaktiven Endgruppen.

Ein weiterer Gegenstand der Erfindung ist ein Verfahren zur Herstellung der erfindungsgemäßen flexiblen Formteile aus geschäumtem Polyurethan mit Dichten von <500 kg/m³, bevorzugt von <350 kg/m³ und mit einer maximalen Formteilschwindung von 1,5 % (gemäß DIN ISO 02769), welches dadurch gekennzeichnet ist, dass
A) die Komponente a) mit der Komponente b) und der Komponente c) unter Zusatz der Komponenten d), e) und f) in Gegenwart der Komponente g) in einer Form zur Reaktion gebracht werden, wobei eine Kennzahl von 95 bis 115 eingestellt wird,
B) das hergestellte Formteil aus der Form entfernt wird.

Als Ausgangskomponente a) für die erfindungsgemäßen Formteile eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der n = 2 bis 4, vorzugsweise 2, und Q einen aliphatischen Kohlenwasserstoffrest mit 2 bis 18, vorzugsweise 6 b is 10 C -Atomen, einen cycloaliphatischen Kohlenwasserstoffrest m it 4 bis 15, vorzugsweise 5 bis 10 C-Atomen, einen aromatischen Kohlenwasserstoffrest mit 6 bis 15, vorzugsweise 6 bis 13 C-Atomen, oder einen aralipliatischen Kohlenwasserstoffrest mit 8 bis 15, vorzugsweise 8 bis 13 C-Atomen, bedeuten, z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenylpolymethylen-polyisocyanate, wie sie durch Anilin-Formaldehyd-Kondensation und anschließende Phosgenierung erhalten und z.B. in GB-PS 874 430 und GB-PS 848 671 beschrieben werden, mund p-Isocyanatophenylsulfonylisocyanate gemäß US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 25 04 400, 25 37 685 und 25 52 350 beschrieben werden, Norboman-diisocyanate gemäß US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in US-PS 3 001 9731, in DE-PS 10 22 789, 12 22 067 und 1 027 394 sowie in DE-OS 1 929 034 und 2 004 048 beschrieben werden, Urethangruppen aufweisende Polyisocyanate, wie sie z.B. in der BE-PS 752 261 oder in US-PS 3 394 164 und 3 644 457 beschrieben werden, acylierte Harnstoffgruppen aufweisende Polyisocyanate gemäß DE-PS 1 230 778, Biuretgruppen aufweisende Polyisocyanate, wie sie in US-PS 3 124 605, 3 201 372 und 3 124 605 sowie in G B-PS 8 89 0 50 b eschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 4 74 und 1 072 956, in US-PS 3 567 763 und in DE-PS 12 31 688 genannt werden, Umsetzungsprodukte der obengenannten Isocyanate mit Acetalen gemäß DE-PS 1 072 385 und polymere Fettsäureester enthaltende Polyisocyanate gemäß US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, wie sie durch Anilin-Formaldehyd-Kondensation und anschließende Phosgenierung hergestellt, werden ("rohes MDI") und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren jedoch Isocyanatgruppen aufweisende Prepolymere verwendet, die hergestellt werden durch Umsetzung mindestens einer Teilmenge Polyolkomponente b1), b2.1), b2.2) oder b2.3) oder deren Mischung und/oder Kettenverlängerer/Vemetzer c) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 6 bis 35 Gew.-%, vorzugsweise von 10 bis 25 Gew.-%.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung erst zur Herstellung der PUR-Elastomere einzuverleiben. Zur Viskositätsveränderung und höheren Gasaufnahme können dem Prepolymer auch nicht reaktive Zusätze, niedermolekulare Ester, wie Phthalate, Adipate, aber auch Ringester, cyklische Carbonate, endständig geblockte Polyether beigefügt werden.

Unter "Polyetheresterpolyol" w ird e ine V erbindung v erstanden, d ie Ethergruppen, Estergruppen und OH-Gruppen aufweist.

Die erfindungsmäß zu verwendenden Polyetheresterpolyole b1) weisen ein zahlenmittleres Molekulargewicht von 800 g/mol bis 6000 g/mol, bevorzugt von 1200 g/mol bis 4000 g/mol auf, haben eine zahlenmittlere Hydroxylfunktionalität von 1,7 bis 4, bevorzugt von 1,8 bis 2,7 und ein Gewichtsverhältnis von Ethergruppen zu Estergruppen von 0,05:0,95 bis 0,48:0,52, besonders bevorzugt von 0,08:0,92 bis 0,3:0,7.

Organische Dicarbonsäuren b1.1) mit bis zu 12 Kohlenstoffatomen sind zur Herstellung der Polyetheresterpolyole geeignet, vorzugsweise aliphatische Dicarbonsäuren mit 4 bis 6 Kohlenstoffatomen, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure genannt. Bevorzugt geeignet sind Fumarsäure und Bernsteinsäure und besonders bevorzugt geeignet sind Glutarsäure und Adipinsäure. Als Derivate dieser Säuren können beispielsweise deren Anhydride sowie deren Ester und Halbester mit niedermolekularen, monofunktionellen Alkoholen mit 1 bis 4 Kohlenstoffatomen eingesetzt werden.

Als Komponente b1.2) zur Herstellung der Polyetheresterpolyole b1) werden Polyetherpolyole eingesetzt, die man durch Alkoxylieren von Startermolekülen, bevorzugt mehrwertigen Alkoholen, erhält. Die Startermoleküle sind mindestens difunktionell, können aber gegebenenfalls auch Anteile höherfunktioneller insbesondere trifunktioneller Startermoleküle enthalten. Das Alkoxylieren erfolgt üblicherweise in zwei Schritten. Zuerst wird in Gegenwart basischer Katalysatoren oder Doppelmetallcyanid-Katalysatoren mit bevorzugt Propylenoxid oder weniger bevorzugt 1,2-Butylenoxid oder weniger bevorzugt 2,3-Butylenoxid alkoxyliert und danach mit Ethylenoxid ethoxyliert. Der Anteil von Ethylenoxid im Polyetherpolyol beträgt 10 Gew.-% bis 40 Gew.-%, bevorzugt 15 Gew.-% bis 35 Gew.-%, besonders bevorzugt 18 Gew.-% bis 32 Gew.-%. Es können als Komponente b1.2) Ether-basierte Polymerpolyole mit OH-Zahlen von 10 bis 149 und mittleren Funktionalitäten von 1,7 bis 4 eingesetzt werden, die 1 bis 50 Gew.-% Füllstoffe, bezogen auf das Polymerpolyol enthalten.

Zur Komponente b1.3) zählen vorzugsweise Diole mit primären OH-Gruppen und zahlenmittleren Molekulargewichten von 62 g/mol bis 750 g/mol, bevorzugt von 62 g/mol bis 400 g/mol, besonders bevorzugt von 62 g/mol bis 200 g/mol. Beispielhaft seien 1,3-Propandiol, 1,5-Pentendiol, 1,5-Pentandiol, Neopentylglykol, 1,6-Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol; 2-Butyl-2-ethyl-1,3-propandiol, 2-Buten-1,4-diol und 2-Butin-1,4-diol, Triethylenglykol, Tetraethylenglykol, Dibutylenglykol, Tributylenglykol, Tetrabutylenglykol, Dihexylenglykol, Trihexylenglykol, Tetrahexylenglykol, Oligomerengemische von Alkylenglykolen und insbesondere 1,2-Ethandiol, 1,4-Butandiol und Diethylenglykol genannt.

Neben den Diolen können auch Polyole mit zahlenmittleren Funktionalitäten oberhalb von 2 bis zu 8, bevorzugt von 2,1 bis 5, besonders bevorzugt von 3 bis 4, mitverwendet werden, z.B. 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von 62 g/mol bis 750 g/mol, bevorzugt von 62 g/mol bis 400 g/mol, besonders bevorzugt von 62 g/mol bis 200 g/mol.

Aus der Gruppe der Diole kann jedes für sich einzeln oder in Kombination mit anderen Diolen und Polyolen eingesetzt werden. Die Di- und Polyole können auch nachträglich zu einem Polyesterpolyol zugesetzt werden, auch wenn sie dadurch nicht bzw. nicht bis zum Erreichen des Polykonsationsgleichgewichtes in der Veresterungsreaktion umgesetzt werden. Der relative Mengeneinsatz von Polyolen wird begrenzt durch die vorgegebene zahlenmittlere Hydroxylfunktionalität des Polyetheresterpolyols b1).

Als Polymerpolyole unter b1.4) und unter b2.1) eignen sich polymermodifizierte Polyole, insbesondere Pfropfpolymerpolyole auf Basis von Polyestern oder Polyetherestem. Als Pfropfkomponente e ignen s ich insbesondere s olche a uf S tyrol- u nd/oder A crylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden. Die Polymerpolyole können als Polyol-Dispersionen vorliegen, die als disperse Phase - üblicherweise in Mengen von 1 bis 50 Gew.-%, vorzugsweise 1 bis 45 Gew.-%, bezogen auf Polymerpolyol, z.B. Polyharnstoffe (PHD), Polyhydrazide, tert.-Aminogruppen gebunden enthaltende Polyurethane enthalten.

Die Mischung b2) besteht aus b2.1) und b2.2).

Geeignete Polyesterpolyole unter b2.1) können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Malonsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 35 bis 50 / 20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Methyl- Propandiol-1,3, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, Diethylenglykol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. o-Hydroxycapronsäure und Hydroxyessigsäure. Als geeignete Polyesterpolyole sind ferner Hydroxylgruppen aufweisende Polycarbonate zu nennen.

Bevorzugt werden Polyesterpolyole mit einem zahlenmittlerem Molekulargewicht von 1000 bis 4000, und einer Funktionalität von 1,7 bis 4, vorzugsweise 1,8 bis 3,5.

Als Polymerpolyole unter b2.1) eignen sich die polymermodifizierten Polyole, die auch unter b1.4) bereits genannt wurden.

Unter der Komponente b2.2) werden Polyetherpolyole eingesetzt, die man durch Alkoxylieren von Startermolekülen, bevorzugt mehrwertigen Alkoholen, erhält. Die Startermoleküle sind mindestens difunktionell, können aber gegebenenfalls auch Anteile höherfunktioneller insbesondere trifunktioneller Startermoleküle enthalten. Das Alkoxylieren erfolgt üblicherweise in zwei Schritten. Zuerst wird in Gegenwart basischer Katalysatoren oder Doppelmetallcyanid-Katalysatoren mit bevorzugt Propylenoxid oder weniger bevorzugt 1,2-Butylenoxid oder weniger bevorzugt 2,3-Butylenoxid alkoxyliert und danach mit Ethylenoxid ethoxyliert. Der Anteil von Ethylenoxid im Polyetherpolyol beträgt von 10 Gew.-% bis 40 Gew.-%, bevorzugt 15 Gew.-% bis 35 Gew.-%, besonders bevorzugt 18 Gew.-% bis 32 Gew.-%.

Die unter b2.2) eingesetzten Ether-basierten Polymerpolyole sind vorzugsweise polymermodifizierte Polyole, insbesondere Pfropfpolymerpolyole auf Basis von Polyethern. Als Pfropfkomponente eignen sich insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden. Die Polymerpolyole können als Polyol-Dispersionen vorliegen, die als disperse Phase -üblicherweise in Mengen von 1 bis 50 Gew.-%, vorzugsweise 1 bis 45 Gew.-%, bezogen auf die Gesamtmenge an P olymerpolyol, z.B. Polyharnstoffe (PHD), P olyhydrazide und tert.-Aminogruppen gebunden enthaltende Polyurethane enthalten.

Als Komponente c) werden Kettenverlängerer und/oder Vernetzer eingesetzt.

Derartige Kettenverlängerer/Vernetzer werden zur Modifizierung der mechanischen Eigenschaften, insbesondere der Härte des Formteils eingesetzt. Geeignet sind vorzugsweise Diole mit primären OH-Gruppen und zahlenmittleren Molekulargewichten unter 750 g/mol, bevorzugt von 62 g/mol bis 400 g/mol, besonders bevorzugt von 62 g/mol bis 200 g/mol. Beispielhaft seien 1,3-Propandiol, 1,5-Pentendiol, 1,5-Pentandiol, Neopentylglykol, 1,6-Hexandiol, 1,7-Heptandiol, Octandiol-1,8, 1,10-Decandiol,2-Methyl-1,3-propandiol, 2,2-Dimethyl-1,3-propandiol, 3-Methyl-1,5-pentandiol; 2-Butyl-2-ethyl-1,3-propandiol, 2-Buten-1,4-diol und 2-Butin-1,4-diol, Triethylenglykol, Tetraethylenglykol, Dibutylenglykol, Tributylenglykol, Tetrabutylenglykol, Dihexylenglykol, Trihexylenglykol, Tetrahexylenglykol, Oligomerengemische von Alkylenglykolen und insbesondere 1,2-Ethandiol, 1,4-Butandiol und Diethylenglykol genannt.

Neben den Diolen können auch Polyole mit zahlenmittleren Funktionalitäten oberhalb von 2 bis zu 8, bevorzugt von 2,1 bis 5, besonders bevorzugt von 3 bis 4, mitverwendet werden, z.B. 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten unter 750 g/mol, bevorzugt von 62 g/mol bis 400 g/mol, besonders bevorzugt von 62 g/mol bis 200 g/mol.

Aus der Gruppe der Diole kann jedes für sich einzeln oder in Kombination mit anderen Diolen und Polyolen eingesetzt werden.

Vernetzer sind zusätzlich zu den vorgenannten Polyolen, z.B. Triole, Tetraole, oligomere Polyalkylenpolyole, aromatische und aliphatische Amine und Diamine mit einer Funktionalität von 2 bis 8, bevorzugt von 2 bis 4, die üblicherweise Molekulargewichte kleiner 750 g/mol besitzen, vorzugsweise von 62 bis 400 g/mol, besonders bevorzugt von 62 bis 200 g/mol.

Die Komponente c) liegt vorzugsweise in einer Menge von 5 bis 25 Gew.-%, bezogen auf die Summe der Komponenten b) und c) vor.

Als Treibmittelkomponente d) werden Kombinationen von d1) und d2) eingesetzt, wobei d1) aus der Gruppe Stickstoff, Luft und/oder Kohlendioxid stammt. Hierbei ist es vorteilhaft, wenn diese Gase aus d1) oberhalb atmosphärischem Druck den Komponenten a) und/oder b) zugesetzt werden, vorzugsweise zwischen 1 und 11 bar absolut.

Als Treibmittelkomponente d2) können physikalische Treibmittel, die unter dem Einfluss der exothermen Polyadditionsreaktion verdampfen und vorzugsweise einen Siedepunkt unter Normaldruck im Bereich von -30 bis 75°C haben, eingesetzt werden. Es können auch chemische Treibmittel, wie z.B. Wasser und Carbamate eingesetzt werden. Beispielhaft seien genannt: Aceton, Ethylacetat, halogensubstituierte Alkane, perhalogenierte Alkane, wie R134a, R141b, R365mfc, R245fa, Butan, Pentan, Cyclopentan, Hexan, Cyclohexan, Heptan oder Diethylether. Eine Treibwirkung kann auch durch Zusatz von Verbindungen erzielt werden, die sich bei Temperaturen oberhalb der Raumtemperatur unter Abspaltung von Gasen, beispielsweise von Stickstoff und/oder Kohlendioxid, zersetzen, wie Azoverbindungen, z.B. Azodicarbonamido der Azoisobuttersäurenitril, oder Salze, wie Ammoniumbicarbonat, Ammoniumcarbamat oder Ammoniumsalze organischer Carbonsäuren, z.B. Monoammoniumsalze der Malonsäure, Borsäure, Ameisensäure oder Essigsäure. Weitere Beispiele für Treibmittel sowie Einzelheiten über die Verwendung von Treibmitteln sind in R. Vieweg, A. Höchtlen (Hrsg.): "Kunststoff-Handbuch", Band VII, Carl-Hanser-Verlag, München 3. Auflage, 1993, S.115 bis 118, 710 bis 715 beschrieben.

Vorzugsweise kann bei Bedarf auch ein Emulgator e) zugesetzt werden, insbesondere bei Einsatz von Wasser als Komponente d2).

Als Komponente e) können anionische, kationische, amphotere oder nichtionische (neutrale) Emulgatoren eingesetzt werden.

Zur Herstellung der Formteile können gegebenenfalls weitere Zusatzstoffe f) verwendet werden. Genannt seien beispielsweise oberflächenaktive Zusatzstoffe, wie Schaumstabilisatoren, Zellregler, Flammschutzmittel, Keimbildungsmittel, Oxidationsverzögerer, Stabilisatoren, Gleit-und Entformungsmittel, Füllstoffe, Farbstoffe, Dispergierhilfen und Pigmente. Es können auch Reaktionsverzögerer, Flammschutzmittel, Antistatika, Stabilisatoren gegen Alterungs- und Witterungseinflüsse, Weichmacher, Viskositätsregler und fungistatisch und bakteriostatisch wirkende Substanzen eingesetzt werden.

Als Komponente g) können die bekannten Aminkatalysatoren eingesetzt werden, z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe, 1,4-Diazabicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-hamstoff, Bis-(dimethylaminopropyl)-amin, 1,2-Dimethylimidazol, 2-Methylimidazol, Diazabicycloundecen, monocyclische und bicyclische Amidine, Bis-(dialkylamino)-alkylether, wie z.B. Bis(dimethylaminoethyl)ether, sowie Amidgruppen (vorzugsweise Formamidgruppen) aufweisende tertiäre Amine. Als Katalysatoren kommen auch Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, N-Nonylphenol oder Bisphenol A, in Frage. Gegenüber Isocyanatgruppen Zerewittinoff-aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine. Als Katalysatoren können ferner Silaamine mit Kohlenstoff-Silizium-Bindungen eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt. Erfindungsgemäß können auch organische Metallverbindungen des Zinns, Titans, Bismuts, insbesondere organische Zinnverbindungen, als zusätzliche Katalysatoren mitverwendet werden. Als organische Zinnverbindungen kommen neben schwefelhaltigen Verbindungen, wie Di-n-octyl-zinn-mercaptid, vorzugsweise Zinn(II)-salze von Carbonsäuren, wie Zinn(II)-acetat, Zinn(II)-octoat, Zinn(II)-ethylhexoat, Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Aus den Komponenten a) b is f) können die erfindungsgemäßen Formteile formgenau und ohne sogenannte Kemverbrennung hergestellt werden.

Die Formteile werden bevorzugt als Schuhsohlen, insbesondere als Zwischensohle für Schuhe eingesetzt. Sie können auch als Platten und Schuhbauteile verwendet werden.

Die Erfindung soll anhand der nachfolgenden Beispiele näher erläutert werden.

### Beispiele

Die Herstellung der Polyurethan-Prüfkörper erfolgte derart, dass man die sog. "A"-Komponente (Isocyanatgruppen-haltige Komponente) bei 45°C in einer Niederdruck-Verarbeitungsmaschine, z.B. einer RGE 612 der Fa. Klöckner DESMA Schuhmaschinen GmbH, mit der sog. "B"-Komponente (Komponenten b) bis f)) bei 45°C vermischte, die Mischung in eine auf 60°C temperierte Aluminiumform eindosierte, die Form schloss und nach 4 Minuten das Elastomer entformte. Die Zudosierung der gasförmigen Treibmittel in die Komponenten A und B erfolgte über einen Druckminderer (Druck <6bar) in einen Begasungsmischkopf und über einen Rezirkulationskreislauf bis zum Druckausgleich zwischen Maschinenbehälter und Begasungsmischkopf. Die Zusammensetzungen sind der Tabelle 1 zu entnehmen.

### Ausgangskomponenten:

### Prepolymer 1 (P1):

60,0 Gew.-Teile 4,4'- Diisocyanatodiphenylmethan (4,4'-MDI; NCO - Gehalt 33,6 Gew.-%) und 6,5 Gew. -Teile Carbodiimid-modifiziertes 4,4'-MDI werden bei 50°C mit 33,5 Gew.-Teilen Polyethylenbutylenadipat (OH-Zahl 56) gemischt und zwei Stunden unter Stickstoff auf 80°C erhitzt. Das resultierende Produkt ist eine klare Flüssigkeit mit folgenden Kenndaten :
NCO-Gehalt = 20,7 Gew.-%
Viskosität bei 25°C ca. 1100 mPa·s

### Prepolymer 2 (P2):

46,0 Gew.-Teile 4,4'- Diisocyanatodiphenylmethan (NCO - Gehalt 33,6 Gew.-%) und 5 Gew.-Teile Carbodiimid-modifiziertes 4,4'-MDI werden bei 50°C mit 49 Gew.-Teilen Polyethylenbutylenadipat (OH-Zahl 29) gemischt und zwei Stunden unter Stickstoff auf 80°C erhitzt. Das resultierende Produkt ist eine klare Flüssigkeit mit folgenden Kenndaten:
NCO - Gehalt = 16 Gew.%
Viskosität bei 25°C ca. 5500 mPa·s

### Polyole:

Als Polyolkomponenten finden folgende Materialien Verwendung:
1. Polyesterpolyol (X1): lineares Polyethylenbutylenadipat, OH-Zahl: 55
2. Polyesterpolyol (X2): linearer Polyethylenbutylencarbonsäureester auf Basis techn. Glutarsäure, OH-Zahl: 55
3. Polyetherpolyol (X3): lineares Polyoxypropylenoxyethylenblock-copolyetherdiol, OH-Zahl : 28
4. Polymerpolyol (X4): auf Glyzerin gestartetetes Polyoxypropylenoxyethylenblockcopolyethertriol (OH-Zahl : 35), das 40 Gew.-% Styrolacrylnitril (SAN) enthält

- Dabco krist.:: Dabco Crystal, Aminkatalysator von Air Products
- DC 193:: Dabco DC 193 Surfactant, Schaumstabilisator von Air Products
- LK 443:: Dabco LK 443 Sufactant, Schaumstabilisator von Air Products
- 365 mfc:: Solkane 365 mfc, Treibmittel von Solvay

**Tabelle 1: Zusammensetzungen in Gew.-Teilen**

| **Beispiel** | **1*** | **2** | **3** | **4** | **5** |
|---|---|---|---|---|---|
| X1 | 100 | 90 | | 85 | 90 |
| X2 | | | 85 | | |
| X3 | | 10 | 5 | | 10 |
| X4 | | | 10 | 15 | |
| Ethylenglykol | 15 | 15 | 12 | 15 | 15 |
| Dabco krist. | 0,4 | 0,4 | 0,4 | 0,4 | 0,4 |
| Wasser | 0,6 | 0,58 | 0,59 | 0,61 | 0,1 |
| 365 mfc | | | | | 2 |
| DC193 | 0,2 | 0,2 | 0,2 | 0,2 | 0,2 |
| LK443 | 0,95 | 0,95 | 0,95 | 0,95 | 0,95 |
| CO2 [bar] | 4,9 | 5,0 | 4,9 | 4,8 | 5,1 |
| P1 | | | 108,4 | 132,4 | 116,3 |
| P2 | 161,7 | 164 | | | |

| | | | | | |
|---|---|---|---|---|---|
| * Vergleich | | | | | |

**Tabelle 2: Eigenschaften**

| **Beispiel** | **1 *** | **2** | **3** | **4** | **5** |
|---|---|---|---|---|---|
| Freischaumdichte [kg/m³] | 145 | 11 5 | 129 | 119 | 116 |
| Schwindung des Freischaumes nach 20 min. | - | + | + | + | + |
| Porenstruktur | Grob | Fein | Mittel | Fein | Fein |
| Formteildichte [kg/m³] | 276 | 232 | 243 | 238 | 229 |
| Schwindung des Formteils in [%] nach 48 h | >5 * | 0,9 | 1,3 | 1,1 | 1,5 |
| Formabprägung | - | + | + | + | ++ |
| Hautbeschaffenheit | -- | ++ | + | + | ++ |
| Härte [Sh A] | ** | 32 | 29 | 37 | 35 |

| | | | | | |
|---|---|---|---|---|---|
| * Formteil deformiert | | | | | |
| ** nicht messbar | | | | | |
| -- sehr schlecht | | | | | |
| - schlecht | | | | | |
| o befriedigend | | | | | |
| + gut | | | | | |
| ++ sehr gut | | | | | |

## Patentansprüche

1. Flexible Formteile aus geschäumtem Polyurethan mit Formteildichten von <500 kg/m³ und mit einer maximalen Formteilschwindung von 1,5 % (gemäß DIN ISO 02769) erhältlich aus
a) einem oder mehreren organischen Isocyanaten mit 2 bis 4 NCO-Gruppen pro Molekül und einem NCO-Gehalt von 6-49 Gew.-%,
b) einer oder mehreren Polyolkomponenten aus der Gruppe bestehend aus
b1) Polyetheresterpolyolen mit einem zahlenmittleren Molekulargewicht von 800 g/mol bis 6000 g/mol, einer zahlenmittleren Funktionalität von 1,7 bis 4 und einem Gewichtsverhältnis von Ethergruppen zu Estergruppen des Polyetheresterpolyols von 0,05:0,95 bis 0,48:0,52,
wobei die Polyetheresterpolyole erhältlich sind durch Polykondensation von
b1.1) einer oder mehreren Dicarbonsäuren mit bis zu 12 Kohlenstoffatomen und/oder deren Derivaten,
b1.2) einer oder mehreren Polyetherpolyolkomponenten aus der Gruppe bestehend aus Polyetherpolyolen mit einem zahlenmittleren Molekulargewicht von 1000 g/mol bis 8000 g/mol, einer mittleren Funktionalität von 1,7 bis 4 sowie einem Ethylenoxidgehalt von 10 bis 40 Gew.-% und Ether-basierten Polymerpolyolen mit OH-Zahlen von 10 bis 149 und mittleren Funktionalitäten von 1,7 bis 4, die 1 bis 50 Gew.-% Füllstoffe, bezogen auf die Gesamtmenge an Polymerpolyol enthalten,
b1.3) einem oder mehreren Polyolen mit einem zahlenmittleren Molekulargewicht von 62 bis 750 g/mol, einer zahlenmittleren Funktionalität von 2 bis 8 und mit mindestens 2 endständigen OH-Gruppen pro Molekül,
b1.4) gegebenenfalls Ester- basierte Polymerpolyole, die OH-Zahlen von 10 bis 149 und mittlere Funktionalitäten von 1,7 bis 4 aufweisen und die 1 bis 50 Gew.-% Füllstoffe, bezogen auf die Gesamtmenge an Polymerpolyol enthalten,
und
b2) einer Mischung aus
b2.1) einer oder mehreren Polyesterpolyolkomponenten aus der Gruppe bestehend aus Polyesterpolyolen mit einem zahlenmittleren Molekulargewicht von 1000 bis 4000 g/mol und einer Funktionalität von 1,7 bis 4 und Ester-basierten Polymerpolyolen mit OH-Zahlen von 10 bis 149 und mittleren Funktionalitäten von 1,7 bis 4, die 1 bis 50 Gew.-% Füllstoffe, bezogen auf die Gesamtmenge an Polymerpolyol enthalten,
b2.2) 5 bis 48 Gew.-%, bezogen auf b2.1) einer oder mehrerer Polyetherpolyolkomponenten aus der Gruppe bestehend aus Ethylenoxidgruppen enthaltenden Polyetherpolyolen mit jeweils einem zahlenmittleren Molekulargewicht von 9 00 bis 18000 g/mol einer Funktionalität von 1,7 bis 4 und einem Ethylenoxidgehalt von 10 bis 40 Gew.-% und Ether-basierten Polymerpolyolen, die OH-Zahlen von 10 bis 149 und mittlere Funktionalitäten von 1,7b is 4 aufweisen und die 1 bis 50 Gew.-% Füllstoffe, bezogen auf die Gesamtmenge an Polymerpolyol enthalten,
c) 5 bis 25 Gew.-%, bezogen auf die Summe der Komponente b) und c) an Vemetzungsmitteln/Kettenverlängerern
d) Treibmittelkomponenten bestehend aus
d1) Stickstoff, Luft und/oder Kohlendioxid und
d2) wenigstens einer Komponente aus der Gruppe bestehend aus chemischen Treibmitteln und physikalischen Treibmitteln mit Siedepunkten im Bereich von - 30°C bis 75°C,
e) gegebenenfalls Emulgatoren,
f) gegebenenfalls Zusatz- und Hilfsmitteln,
g) gegebenenfalls Katalysatoren,
wobei die Kennzahl 95 bis 115 beträgt.

2. Verfahren zur Herstellung der flexiblen Formteile aus geschäumtem Polyurethan gemäß Anspruch 1, **dadurch gekennzeichnet, dass**
A) die Komponente a) mit der Komponente b) und der Komponente c) unter Zusatz der Komponente d), e) und f) in Gegenwart der Komponente g) in einer Form zur Reaktion gebracht werden, wobei eine Kennzahl von 95 bis 115 eingestellt wird und
B) das so hergestellte Formteil aus der Form entfernt wird.

3. Verwendung der flexiblen Formteile gemäß Anspruch 1 als Schuhsohle, Z wischensohle für Schuhe, Platte und Schuhbauteile.

## Claims

1. Flexible mouldings of foamed polyurethane with moulding densities of < 500 kg/m³ and with a maximum moulding shrinkage of 1.5% (to DIN ISO 02769) obtainable from
a) one or more organic isocyanates having 2 to 4 NCO groups per molecule and an NCO content of 6 - 49 wt.%,
b) one or more polyol components from the group consisting of
b1) polyetherester polyols with a number-average molecular weight of 800 g/mol to 6000 g/mol, a number-average functionality of 1.7 to 4 and a ratio by weight of ether groups to ester groups of the polyetherester polyol of 0.05:0.95 to 0.48:0.52,
wherein the polyetherester polyols are obtainable by the polycondensation of
b1.1)one or more dicarboxylic acids having up to 12 carbon atoms and/or their derivatives,
b1.2)one or more polyether polyol components from the group consisting of polyether polyols with a number-average molecular weight of 1000 g/mol to 8000 g/mol, an average functionality of 1.7 to 4 and an ethylene oxide content of 10 to 40 wt.% and ether-based polymer polyols with OH numbers of 10 to 149 and average functionalities of 1.7 to 4, which contain 1 to 50 wt.% of fillers, referred to the polymer polyol,
b1.3)one or more polyols with a number-average molecular weight of 62 to 750 g/mol, a number-average functionality of 2 to 8 and having at least 2 terminal OH groups per molecule,
b1.4)optionally ester-based polymer polyols which have OH numbers of 10 to 149 and average functionalities of 1.7 to 4 and which contain 1 to 50 wt.% of fillers, referred to the polymer polyol,
and
b2) a mixture of
b2.1) one or more polyester polyol components from the group consisting of polyester polyols with a number-average molecular weight of 1000 to 4000 g/mol and a functionality of 1.7 to 4 and ester-based polymer polyols with OH numbers of 10 to 149 and average functionalities of 1.7 to 4, which contain 1 to 50 wt.% of fillers, referred to the total amount of polymer polyol,
b2.2)5 to 48 wt.%, referred to b2.1), of one or more polyether polyol components from the group consisting of ethylene oxide group-containing polyether polyols each with a number-average molecular weight of 900 to 18000 g/mol, a functionality of 1.7 to 4 and an ethylene oxide content of 10 to 40 wt.%, and ether-based polymer polyols which have OH numbers of 10 to 149 and average functionalities of 1.7 to 4 and which contain 1 to 50 wt.% of fillers, referred to the total amount of polymer polyol,
c) 5 to 25 wt.%, referred to the sum of components b) and c), of crosslinking agents/chain extenders,
d) blowing agent components consisting of
d1) nitrogen, air and/or carbon dioxide and
d2) at least one component from the group consisting of chemical blowing agents and physical blowing agents with boiling points in the range of - 30 °C to 75 °C,
e) optionally emulsifiers,
f) optionally additives and auxiliary substances,
g) optionally catalysts,
in which the coefficient amounts to 95 to 115.

2. Process for producing the flexible mouldings of foamed polyurethane according to claim 1, **characterised in that**
A) component a) is reacted with component b) and component c) in a mould with the addition of components d), e) and f) in the presence of component g), wherein a coefficient of 95 to 115 is set, and
B) the moulding so produced is removed from the mould.

3. Use of the flexible mouldings according to claim 1 as shoe soles, in-soles for shoes, plates and shoe components.

## Revendications

1. Pièces moulées flexibles en polyuréthane foisonné ayant des densités de moulage < 500 kg/m³ et un rétrécissement au moulage maximal de 1,5 % (selon la norme DIN ISO 02769) pouvant être obtenues à partir
a) d'un ou de plusieurs isocyanates organiques ayant de 2 à 4 groupes NCO par molécule et une teneur en NCO de 6 à 49 % en poids,
b) d'un ou de plusieurs composants polyols du groupe constitué par
b1) les esters de polyéthers - polyols, ayant un poids moléculaire moyen en nombre de 800 g/mol à 6000 g/mol, une fonctionnalité moyenne en nombre de 1,7 à 4 et un rapport en poids des groupes éthers sur les groupes esters de l'ester de polyéther - polyol de 0,05/0,95 à 0,48/0,52,
où les esters de polyéthers - polyols peuvent être obtenus par polycondensation
b1.1) d'un ou de plusieurs acides dicarboxyliques ayant jusqu'à 12 atomes de carbone et/ou de leurs dérivés,
b1.2) d'un ou de plusieurs composants de polyéthers - polyols du groupe constitué des polyéthers - polyols, ayant un poids moléculaire moyen en nombre de 1000 g/mol à 8000 g/mol, une fonctionnalité moyenne de 1,7 à 4 et une teneur en oxyde d'éthylène de 10 à 40 % en poids et de polymères polyols à base d'éthers ayant des indices OH de 10 à 149 et des fonctionnalités moyennes de 1,7 à 4, qui contiennent de 1 à 50 % en poids de charges, par rapport à la quantité totale de polymère polyol,
b1.3) d'un ou de plusieurs polyols ayant un poids moléculaire en nombre de 62 à 750 g/mol, une fonctionnalité moyenne en nombre de 2 à 8 et ayant au moins 2 groupes OH terminaux par molécule,
b1.4) le cas échéant de polymères polyols à base d'esters, présentant des indices OH de 10 à 149 et des fonctionnalités moyennes de 1,7 à 4 et contenant de 1 à 50 % en poids de charges, par rapport à la quantité totale de polymère polyol,
et
b2) d'un mélange
b2.1) d'un ou de plusieurs composants de polyesters - polyols du groupe constitué des polyesters - polyols, ayant un poids moléculaire moyen en nombre de 1000 g/mol à 4000 g/mol et une fonctionnalité de 1,7 à 4 et de polymères polyols à base d'esters, ayant des indices OH de 10 à 149 et des fonctionnalités moyennes de 1,7 à 4, qui contiennent de 1 à 50 % en poids de charges, par rapport à la quantité totale de polymère polyol,
b2.2) de 5 à 48 % en poids, par rapport à b2.1) d'un ou de plusieurs composants de polyéthers - polyols du groupe constitué des polyéthers - polyols contenant des groupes oxyde d'éthylène, ayant respectivement un poids moléculaire moyen en nombre de 900 g/mol à 18000 g/mol, une fonctionnalité de 1,7 à 4 et une teneur en oxyde d'éthylène de 10 à 40 % en poids et de polymères polyols à base d'éthers, présentant des indices OH de 10 à 149 et des fonctionnalités moyennes de 1,7 à 4 et contenant de 1 à 50 % en poids de charges, par rapport à la quantité totale de polymère polyol,
c) de 5 à 25 % en poids, par rapport à la somme des composants b) et c) de réticulants/allongeurs de chaîne
d) de composants propulseurs constitués
d1) d'azote, d'air et/ou de dioxyde de carbone et
d2) d'au moins un composant du groupe constitué des propulseurs chimiques et des propulseurs physiques ayant des points d'ébullition dans la plage allant de -30°C à 75°C,
e) le cas échéant, d'émulsifiants,
f) le cas échéant, d'additifs et d'auxiliaires,
g) le cas échéant, de catalyseurs,
où l'indice caractéristique est de 95 à 115.

2. Procédé de fabrication de pièces moulées flexibles en polyuréthane foisonné selon la revendication 1, **caractérisé en ce que**
A) le composant a) avec le composant b) et le composant c) en ajoutant les composants d), e) et f) en présence du composant g) sont amenés à réagir dans un moule, où un indice caractéristique de 95 à 115 est ajusté et
B) la pièce moulée ainsi fabriquée est retirée du moule.

3. Utilisation des pièces moulées flexibles selon la revendication 1 comme semelles de chaussures, semelles intermédiaires pour des chaussures, talons et composants de chaussures.
